Europäisches Patentamt

European Patent Office

Office européen des brevets

(19)

(11) Numéro de publication: **0 239 141 B1**

# FASCICULE DE BREVET EUROPEEN

(12)

(45) Date de publication de fascicule du brevet:
02.05.91

(51) Int. Cl.⁵: **E04D 3/08**

(21) Numéro de dépôt: 87200272.0

(22) Date de dépôt: 20.02.87

(54) **Système de toiture ouvrante, notamment pour véranda, et profiles pour sa réalisation.**

(30) Priorité: 03.03.86 FR 8603383

(43) Date de publication de la demande:
30.09.87 Bulletin 87/40

(45) Mention de la délivrance du brevet:
02.05.91 Bulletin 91/18

(84) Etats contractants désignés:
BE CH DE ES FR GB IT LI LU NL

(56) Documents cités:
EP-A- 0 001 948
DE-A- 2 445 838
US-A- 4 070 806

(73) Titulaire: **Manenc, Christian**
**12, rue du Vercors**
**F-31120 Portet sur Garonne(FR)**

(72) Inventeur: **Manenc, Christian**
**12, rue du Vercors**
**F-31120 Portet sur Garonne(FR)**

(74) Mandataire: **Barre, Philippe**
**Cabinet Barre-Gatti-Laforgue 95 rue des**
**Amidonniers**
**F-31069 Toulouse Cédex(FR)**

# Description

L'invention concerne un systeme de toiture, notamment pour véranda, du type comprenant une couverture formée à partir de panneaux de remplissage portés par des profilés-chevrons.

Différents systèmes de toiture pour véranda sont constitués de chevrons reposant en partie haute sur un profilé mural fixé horizontalement contre un mur arrière et, en partie basse, sur un profilé de façade disposé à la partie supérieure de la façade. Les qualités primordiales recherchées lors de la conception de ces systèmes de toiture sont, actuellement, qualité d'étanchéité, facilité de mise en place, simplicité du système et prix de revient réduit. Ce but est notamment atteint avec un système de toiture composé de profilés-chevrons présentant une section en T renversé. La couverture est, quant à elle, constituée de panneaux de remplissage reposant latéralement sur les profilés-chevrons, les extrémités latérales de ces panneaux étant recouvertes, soit d'un parclose de verrouillage, soit d'un joint à lèvre, fixés sur l'âme du profilé-chevron.

Par contre, il n'existe pas à l'heure actuelle de système de toiture permettant de solutionner les problèmes de température excessive régnant à l'intérieur des vérandas lors des grosses chaleurs estivales. En effet, les seules solutions appliquées à l'heure actuelle consistent en la réalisation de façades partiellement ouvrantes qui permettent une circulation d'air à l'intérieur des vérandas, mais n'empêchent pas l'effet de serre.

La présente invention se propose de pallier cet inconvénient des sytèmes de toiture actuel, en fournissant un nouveau système de toiture conciliant les qualités d'étanchéité, de simplicité de structure et de facilité de montage et dont l'objectif essentiel est de permettre la réalisation de toitures, notamment pour verandas, partiellement ouvrantes.

Un autre objectif de l'invention est de permettre la réalisation d'une toiture ouvrante à partir d'un système de toiture présentant une structure simple qui n'en obère pas le coût.

Un autre objectif de l'invention est de permettre la transformation de toitures fixes actuelles en toitures ouvrantes en quelques opérations ne nécessitant pas le démontage de la structure porteuse de la couverture.

A cet effet, le système de toiture, notamment pour véranda, du type comprenant un profilé mural adapté pour être fixé horizontalement contre un support et une couverture composée de panneaux de remplissage portés par des profilés-chevrons reposant en partie haute sur le profilé mural et en partie basse sur un profilé de façade, est caractérisé en ce que :

- chaque profilé-chevron comprend de part et d'autre d'une âme, au moins deux feuillures superposées, formées par des ailettes faisant saillie de part et d'autre de ladite âme,

- au moins deux panneaux de remplissage sont disposés entre deux profilés-chevrons voisins, chacun desdits panneaux pénétrant latéralement dans une feuillure desdits profilés-chevrons et possédant une hauteur inférieure au pureau de la toiture, de façon qu'au moins un de ces panneaux puisse coulisser le long des profilés-chevrons, entre deux positions extrêmes :
  . une position de fermeture où lesdits panneaux s'étendent sur la totalité du pureau de la couverture,
  . une position d'ouverture où, au moins un des panneaux de remplissage s'escamote au moins partiellement au-dessus ou au-dessous du panneau de remplissage contigu,
- des moyens d'étanchéité, dits supérieurs, sont interposés entre le profilé mural et un des panneaux de remplissage, dit panneau haut, appelé, en position de fermeture, à se positionner contre ledit profilé mural,
- des moyens d'étanchéité, dits inférieurs, sont interposés entre le profilé de façade et un des panneaux de remplissage, dit panneau bas, appelé, en position de fermeture, à se positionner contre ledit profilé de façade,
- des moyens d'étanchéité, dits intermédiaires, sont interposés transversalement entre deux panneaux de remplissage contigus,
- des moyens d'étanchéité, dits latéraux, sont interposés entre les extrémités latérales des panneaux de remplissage et les profilés-chevrons.

Ainsi, le système de toiture, conforme à l'invention, permet de réaliser des toitures ouvrantes, par simple coulissement des panneaux de remplissage, tout en présentant une structure simple et de montage facile, comparable tant en coût qu'en complexité, à la structure des toitures réalisées à l'heure actuelle. En fonction du nombre de panneaux de remplissage portés par les feuillures superposées d'un même profilé-chevron, la superficie ouvrable pourra être de l'ordre de la moitié de la superficie de la toiture (deux panneaux), des deux-tiers de cette superficie (trois panneaux) ...

Il est à noter que, si le but premier de l'invention est la réalisation de toitures ouvrantes, les différents éléments constitutifs du système de toiture peuvent également être utilisés, sans aucune modification, pour réaliser une toiture fixe. Dans ce dernier cas, un seul panneau de remplissage est nécessaire entre deux profilés-chevrons voisins.

En outre, ce système de toiture peut également être utilisé dans le but de transformer une toiture existante, par exemple réalisée au moyen de profilés-chevrons en forme de T renversé. Les profilés-chevrons utilisés sont alors des profilés auxiliaires destinés à être assemblés avec les profilés existants de façon à former avec ceux-ci un nouveau profilé-chevron.

Préférentiellement, ces profilés auxiliaires comprennent une âme d'un côté de laquelle font saillie des ailettes définissant au moins deux feuillures superposées, et des moyens de maintien dudit profilé sur le profilé existant.

Selon un mode de réalisation préférentiel, ces moyens de maintien sont constitués de deux ailettes, dont l'une est disposée à l'extrémité inférieure de l'âme, lesdites ailettes faisant saillie par rapport à la face de l'âme opposée aux feuillures et étant espacées d'une distance correspondant à l'épaisseur des panneaux de remplissage de la couverture à transformer.

On constate que la transformation de la toiture existante ne nécessite pas le démontage de la structure-support de cette toiture et requiert uniquement le remplacement de la couverture.

Généralement, la superficie ouvrante des toitures réalisées au moyen de ce système est légèrement inférieure aux valeurs énoncées ci-dessus du fait que, en position de fermeture, les panneaux de remplissage contigus sont positionnés de façon à posséder des portions de recouvrement dotées de joints d'étanchéité intermédiaires, par friction, venant en appui avec le panneau situé en vis-à-vis.

Comme on le comprendra mieux plus loin, la présence de cette portion de recouvrement, associée à la présence des joints d'étanchéité intermédiaires, permet, de façon classique, d'obtenir une couverture bénéficiant d'une bonne étanchéité à l'eau et à l'air au niveau de la jonction entre panneaux de remplissage contigus.

En outre, la possibilité de pouvoir faire coulisser tous les panneaux de remplissage n'apportant qu'un avantage secondaire, chaque profilé-chevron porte, préférentiellement, de part et d'autre de son âme, un panneau de remplissage fixe, logé dans une feuillure, et au moins un panneau de remplissage mobile par rapport audit panneau fixe et logé dans l' (ou les) autres feuillures.

En particulier, pour des toitures de hauteur de pureau courante, ces dispositions conduisent à un système de toiture caractérisé en ce que :

- de part et d'autre de son âme, chaque profilé-chevron comprend deux feuillures superposées portant deux panneaux de remplissage disposés, chacun, dans une feuillure :

  . un panneau de remplissage haut, fixe,
  . un panneau de remplissage bas, mobile par rapport au panneau de remplissage bas,

- chacun des panneaux de remplissage, fixe et mobile, possède une hauteur correspondant au demi-pureau de la couverture augmentée de la portion de recouvrement précitée.

Pour permettre une diminution supplémentaire de la température régnant à l'intérieur des vérandas et se protéger des rayonnements solaires, la toiture peut avantageusement être dotée, entre deux profilés-chevrons voisins, d'un rideau maintenu par au moins une membrure-support dont les extrémités longitudinales sont portées par les profilés-chevrons. Ce rideau est en outre associé à des moyens de déploiement permettant de le déployer suivant un plan parallèle au plan de toiture.

Par ailleurs, le système de toiture conforme à l'invention présente de préférence les autres caractéristiques suivantes qui se combinent pour lui conférer d'excellentes qualités d'étanchéité :

. le profilé mural comporte, de façon classique, une aile supérieure de recouvrement agencée pour former une avancée par rapport au mur, et est doté d'un joint à lèvre venant en contact avec la face supérieure du panneau de remplissage haut,

. chaque panneau de remplissage comprend, au niveau de sa portion de recouvrement, un profilé d'accrochage coiffant l'extrémité de ladite portion et portant les joints d'étanchéité intermédiaires. Ce profilé d'accrochage présente, préférentiellement, la forme d'un U possédant une aile dotée d'une rainure porte-joint dans laquelle est logé le joint intermédiaire. En outre, les profilés d'accrochage du panneau de remplissage fixe portent des moyens d'étanchéité latérale constitués par une cale en un matériau compressible maintenue en pression contre les profilés-chevrons,

. le profilé de façade comprend un profil-porteur s'étendant entre les éléments porteurs verticaux de façade, un profil-chéneau juxtaposé latéralement au profil-porteur et une aile-support faisant saillie au-dessus du profil-porteur et destinée à servir d'appui aux profilés-chevrons. Cette aile-support comprend des moyens d'étanchéité inférieure constitués d'une rainure disposée à l'extrémité de cette aile et dans laquelle est logé un joint adapté pour venir en contact avec la race inférieure du panneau de remplissage bas,

. chaque feuillure des profilés-chevrons est dotée au niveau de l'ailette supérieure qui la délimite d'une rainure porte-joint dans laquelle est disposé un joint d'étanchéité latérale venant en appui contre la face supérieure du panneau logé dans ladite feuillure.

Ces différents moyens d'étanchéité latérale, inférieure, supérieure et intermédiaire, permettent la réalisation d'une toiture bénéficiant d'une bonne étanchéité à l'air et à l'eau, tant au niveau de la jonction avec les profilés mural et de façade, qu'à celui du recouvrement entre panneaux contigus et de la jonction entre panneaux et profilés-chevrons.

L'invention s'étend, en tant que moyens essentiels pour la réalisation d'une toiture conforme à l'invention, à des profilés-chevrons, des profilés de façade et profilés d'accrochage présentant les caractéristiques précédemment définies ou définies plus loin.

Les différents profilés et demi-profilés sont spécialement conçus pour la réalisation du systéme de toiture selon l'invention. La protection individuelle recherchée pour les profilés et demi-profilés est limitée à leur utilisation dans le systéme de toiture revendiqué.

L'invention exposée ci - dessus dans sa forme générale sera mieux comprise à la lecture de la description qui suit et à l'examen des dessins annexés qui en représentent à titre d' exemple non limitatif un mode de réalisation préférentiel et une variante. Sur ces dessins qui font partie intégrante de la présente description :

- la figure 1 est une vue schématique en perspective d'une véranda possédant une toiture réalisée conformément à l'invention,
- la figure 2 est une vue en perspective partielle, comportant un arraché partiel, avec une coupe frontale et une coupé latérale d'une portion de toiture conforme à l'invention,
- les figures 3, 4, 5, 6 présentent en coupes transversales la section des profilés utilisés dans ledit système de toiture,
- la figure 7 est une coupe partielle par un plan vertical AA de la toiture,
- les figures 8 et 9 sont des coupes partielles par des plans BB et respectivement CC, perpendiculaires au plan de la toiture, où seuls les éléments dans le plan de coupe sont représentés,
- la figure 10 est une coupe partielle par un plan DD perpendiculaire au plan de la toiture,
- la figure 11 est une vue en perspective partielle montrant l'agencement de l'extrémité longitudinale d'un profilé de façade conforme à l'invention sur un élement porteur vertical, dans laquelle le cache d'extrémité du chéneau a été partiellement arraché,
- la figure 12 est une coupe transversale sur un profilé-chevron conforme à l'invention, équipé d'un profilé de renfort et de plats destinés à augmenter son inertie,
- la figure 13 est une coupe partielle par un plan vertical de la toiture montrant une variante de réalisation concernant une toiture à panneau fixe,

- la figure 14 présente en coupe transversale la section d'un profilé auxiliaire destiné à être utilisé pour la transformation de toitures existantes.

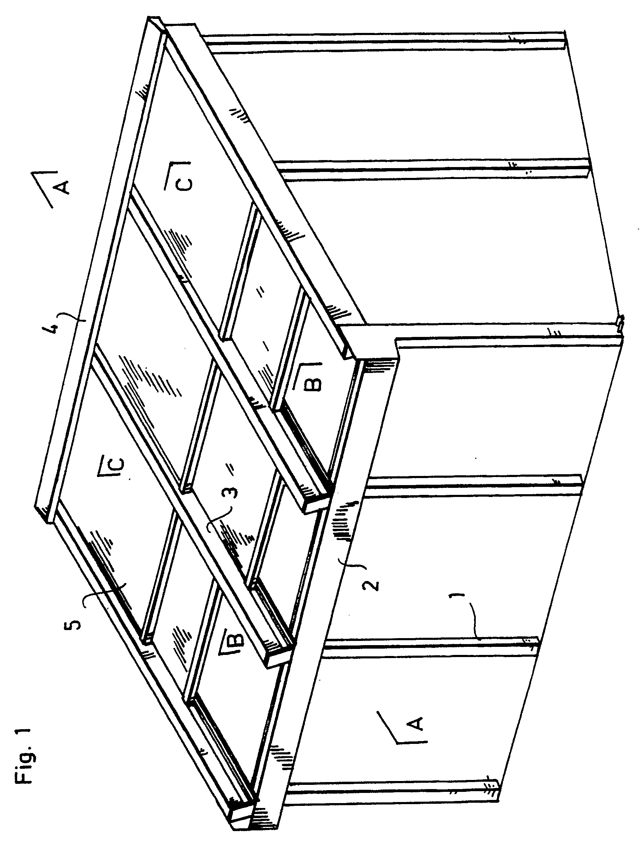

La véranda représentée à titre d'exemple à la figure 1 est adossée de façon traditionnelle à un mur M et comprend des façades classiques, telles que façade frontale pourvue de profilés-porteurs 1 verticaux et d'un profilé 2 de façade supérieur, et façades latérales ; ces façades sont de type connu.

L'ossature est constituée de plusieurs profilés-chevrons 3 s'étendant selon la pente de la toiture et reposant en partie haute sur un profilé 4 mural horizontal et en partie basse sur le profilé de façade 2. La couverture, quant à elle, est constituée de panneaux 5 de remplissage s'étendant entre deux profilés-chevrons 3 voisins. (La toiture comporte en outre des pièces servant de caches aux extrémités respectives des profilés-chevrons, profilé mural et profilé de façade. Ces pièces qui peuvent être de tout type connu ne seront pas décrites en détail).

Les panneaux de remplissage 5 peuvent être de tout type connu en soi, panneau creux extrudé en matière synthétique, panneau plein, vitrage, etc...

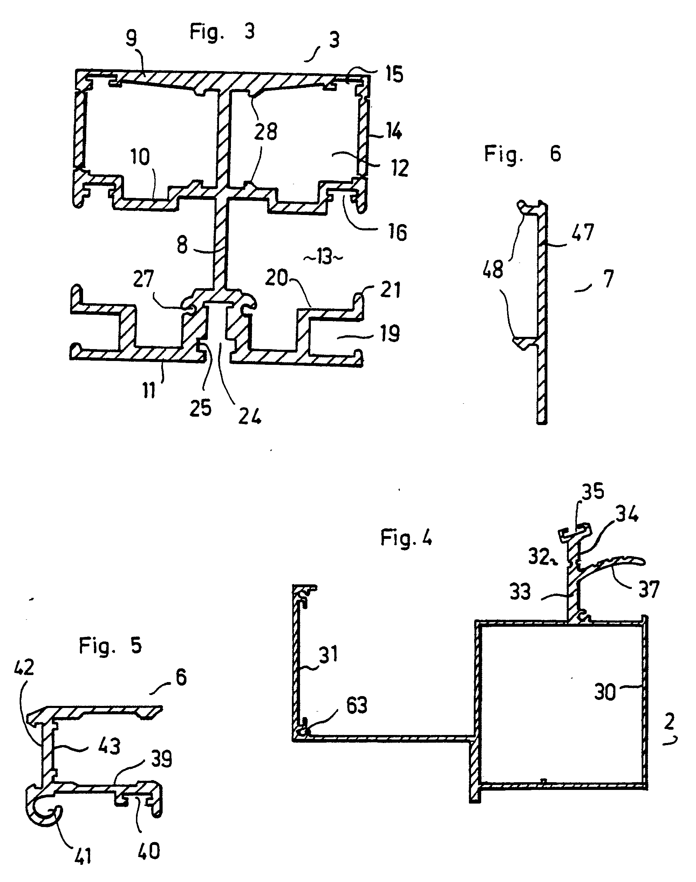

Pour permettre de mieux comprendre la structure du système de toiture, les différents profilés constitutifs 2, 3, 6, 7 sont décrits en détail ci-après en référence aux figures 3, 4, 5, 6.

Le profilé-chevron 3 (figure 3) présente une section s'inscrivant dans un rectangle et comprend une âme 8 de part et d'autre de laquelle font saillie des ailettes 9, 10, 11 définissant deux feuillures 12, 13 superposées : une feuillure supérieure 12 et une feuillure inférieure 13.

La feuillure inférieure est ouverte d'origine, tandis que la feuillure supérieure est fermée par une paroi 14 découpable, susceptible d'être découpée sur une longueur désirée. En règle générale, cette feuillure 12 est destinée à servir de logement à un panneau de remplissage 5 fixe et donc à rester fermée sur la hauteur non occupée par ce panneau fixe. Cette solution évite la pénétration et la stagnation des eaux à l'intérieur de ces feuillures supérieures.

Il convient de noter que le panneau 5 fixe pourrait être positionné dans la feuillure inférieure 13, la feuillure supérieure 12 etant alors découpée d'origine. Il est également possible de disposer deux panneaux 5 mobiles contigus, aucune des feuillures 12, 13 n'étant alors fermée par une paroi 14 découpable.

Chacune des feuillures 12, 13 est en outre dotée au niveau de l'ailette 9, 10 supérieure qui la délimite, d'une rainure 15, 16 porte-joint destinée à loger le talon d'un joint 17, 18 d'étanchéité latérale venant en appui contre la face supérieure du panneau 5 logé dans ladite feuillure 12, 13.

Selon le type de panneau 5, fixe ou mobile, logé dans la feuillure 12, 13, ce joint 17, 18 sera constitué d'un joint brosse 17 (panneau mobile) ou d'un joint néoprène 18 (panneau fixe).

Les ailettes inférieures 11 de ce profilé-chevron délimitent, de part et d'autre de l'âme 8, des rainures 19 possédant une face ouverte à l'opposé de cette âme. La face supérieure 20 de cette rainure 19 est, en outre, délimitée par un rebord 21 vertical situé dans le prolongement de la face ouverte. Ce rebord 21 est destiné à servir d'appui au panneau mobile, logé dans la feuillure inférieure 13, lors de son coulissement.

Ces rainures 19, délimitées par les ailettes inférieures 11, sont adaptées pour loger les embouts longitudinaux de membrures-supports 22 d'un rideau 23 de protection solaire. Ce rideau 23 peut être constitué d'une toile thermosoudée transversalement sur elle-même, à intervalles réguliers, de façon à constituer une pluralité de fourreaux à l'intérieur desquels viennent se loger les membrures-supports 22.

Ces membrures-supports 22 qui auront, par exemple, un entr'axe de l'ordre de 50 centimètres, permettent ainsi d'obtenir un rideau 23 sensiblement plan dans sa position déployée. Afin de permettre le déploiement du rideau 23 sous le plan de toiture, celui-ci sera, en outre, associé à des moyens de déploiement non représentés, adaptés pour entraîner un coulissement des diverses membrures-supports 22 à l'intérieur des rainures 19. Ces moyens de déploiement peuvent être de tout type connu en soi, manuels, mécaniques ou électriques.

En outre, le profilé-chevron 3 est doté, au niveau de l'extrémité inférieure de son âme 8, d'une rainure 24 s'ouvrant en sous-face dudit profilé-chevron. Cette rainure 24 est dotée d'alvéoles 25 adaptés pour permettre la fixation sous le profilé-chevron d'un profilé-bac 26 de récupération des eaux de condensation de la toiture.

Par ailleurs, le profilé-chevron possède des alvéoles 27 pour la fixation des caches en extrémité basse des toitures, ainsi que des nervures 28 disposées sur les faces en regard des ailettes 9, 10 délimitant la feuillure supérieure 12, au voisinage de l'âme 8. Ces nervures 28 sont destinées à former des gorges pour la mise en place de plats 29 destinés à augmenter l'inertie des profilés-chevrons.

Il convient de noter que ces profilés-chevrons 3 peuvent également être réalisés à partir de la juxtaposition de deux demi-profilés-chevrons comprenant une âme d'un côté de laquelle font saillie des ailettes définissant au moins deux feuillures superposées. Ces demi-profilés-chevrons peuvent également être utilisés comme profilés-chevrons de rive.

Le profilé de façade 2 (figure 4) comprend d'un seul tenant :

- un profil-porteur 30 de section rectangulaire adapté pour s'étendre entre les éléments porteurs verticaux 1 de façade,
- un profil-chéneau 31 juxtaposé latéralement au profil-porteur 30 et formant canal d'écoulement des eaux collectées par la toiture,
- une aile-support 32 faisant saillie au-dessus du profil-porteur 30 et destinée à servir d'appui aux profilés-chevrons 3.

Cette aile 32 est constituée d'une branche verticale 33 terminée par une extrémité supérieure 34 découpable, dotée d'une rainure 35 porte-joint destinée à loger le talon d'un joint-brosse 36 venant en contact avec la face inférieure des panneaux de remplissage 5 bas.

Cette extrémité supérieure 34 est appelée à être découpée au droit des profilés-chevrons 3, de façon à permettre l'appui de ceux-ci sur le profilé de façade 2 par l'intermédiaire d'un appui ponctuel, autorisant des inclinaisons différentes de toiture sans affectation de l'étanchéité inférieure de celle-ci.

L'aile 32 du profilé de façade comprend également une ailette 37 s'étendant selon un plan parallèle au plan de toiture et appelée à être percée au droit des profilés-chevrons 3, de façon à permettre le blocage de ceux-ci par un système de vis.

Par ailleurs, le profilé de façade possède des alvéoles 63 pour la fixation des caches sur les côtés de la toiture.

Pour des portées entre éléments porteurs verticaux 1 importantes, ce profilé de façade 2 peut en outre être renforcé, notamment au moyen de raidisseurs logés à l'intérieur du profil-porteur.

Le troisième profilé 6 (figure 4) est un profilé d'accrochage destiné à coiffer l'extrémité des portions de recouvrement de deux panneaux 5 contigus et à porter des joints d'étanchéité 38 intermédiaires entre ces panneaux.

Ce profilé d'accrochage présente la forme d'un U et possède une aile 39 dotée à son extrémité, du côté externe, d'une rainure 40 porte-joint. A la base de cette aile 39, du côté externe, ce profilé est également doté d'un bourrelet 41 creux. En dernier lieu, ce profilé d'accrochage comprend une rainure 42 sur la face externe de son âme 43.

Les profilés d'accrochage 6, appelés à être positionnés aux extrémités respectivement haute et basse de deux panneaux 5 de remplissage contigus, seront disposés en position inversée, de façon que les joints d'étanchéité 38 intermédiaires, en l'exemple des joints brosses logés dans les rainures 40 porte-joints, se trouvent en regard du panneau 5 situé en vis-à-vis.

En outre, les profilés d'accrochage 6 des panneaux de remplissage mobiles sont dotés, aux extrémités longitudinales du bourrelet 41 creux, de patins de guidage 44 logés partiellement dans ce bourrelet et destinés à éviter un contact direct entre le profilé-chevron 3 et le profilé d'accrochage 6 lors du coulissement du panneau mobile 5.

Les profilés d'accrochage 6 des panneaux fixes portent quant à eux des moyens d'étanchéité latérale entre ledit profilé et les profilés-chevrons 3 adjacents. Ces moyens d'étanchéité sont constitués par une cale 45 en un matériau compressible maintenu en pression contre les profilés-chevrons 3.

Par ailleurs, la rainure 42 située sur la face externe de l'âme 43 de ce profilé est destinée à contenir des moyens de verrouillage permettant de bloquer les panneaux mobiles 5 dans des positions données lors de leur coulissement. Ces moyens de verrouillage sont constitués d'un verrou 46 de forme adaptée pour coulisser longitudinalement à l'intérieur de la rainure 42, de façon à venir se loger dans un alésage pratiqué à cet effet dans l'âme 8 du profilé-chevron 3.

Le quatrième profilé 7 (figure 6) est un profilé d'extrémité prévu pour être associé aux profilés-chevrons 3 de rive, en vue d'obturer la face ouverte de la feuillure inférieure 13 de ce profilé. Dans ce but, ce profilé d'extrémité est constitué d'une âme 47 verticale dotée, à distance, de deux nervures 48 venant s'encliqueter à l'intérieur de la feuillure inférieure 13 du profilé-chevron 3.

Il convient également de citer le dernier profilé, dit profilé mural 4, qui possède une forme classique déjà connue en soi. Ce profilé possède une âme 49 appelée à s'appuyer contre le mur M par de petites nervures 50 arrières. En partie haute, ce profilé est pourvu d'une aile de recouvrement 51 qui forme une avancée suffisante pour recouvrir le panneau 5 de remplissage haut.

L'extrémité haute de l'âme 49 est dotée, au-dessus de l'aile de recouvrement 51, d'une rainure 52 destinée à être emplie d'un mastic d'étanchéité. En outre, l'âme 49 du profilé mural porte une rainure 53 porte-joint, dans laquelle est logé le talon d'un joint à lèvre 54 orienté vers le bas ; ce dernier est destiné à venir en appui souple contre la face supérieure du panneau 5 de remplissage haut.

En partie basse, le profilé mural possède une courte aile inférieure dont l'extrémité 56 est courbée vers le bas. Cette aile inférieure 55 est destinée à servir de surface d'appui aux profilés-chevrons 3, l'extrémité courbée 56 permettant de modifier l'inclinaison de la toiture tout en conservant une surface d'appui correcte.

Cette aile inférieure 55 est également dotée, en saillie par rapport à sa face supérieure, d'une ailette 66 verticale terminée par un rebord horizontal 67. Cette ailette 66 est destinée à permettre le maintien de l'extrémité haute du rideau 23 et sera associée, dans ce but, à un joint à clé 68 bloquant ce rideau contre le rebord horizontal 67.

Comme les profilés précédents, ce profilé mural comprend par ailleurs des alvéoles 57 pour la fixation des caches sur les côtés de la toiture.

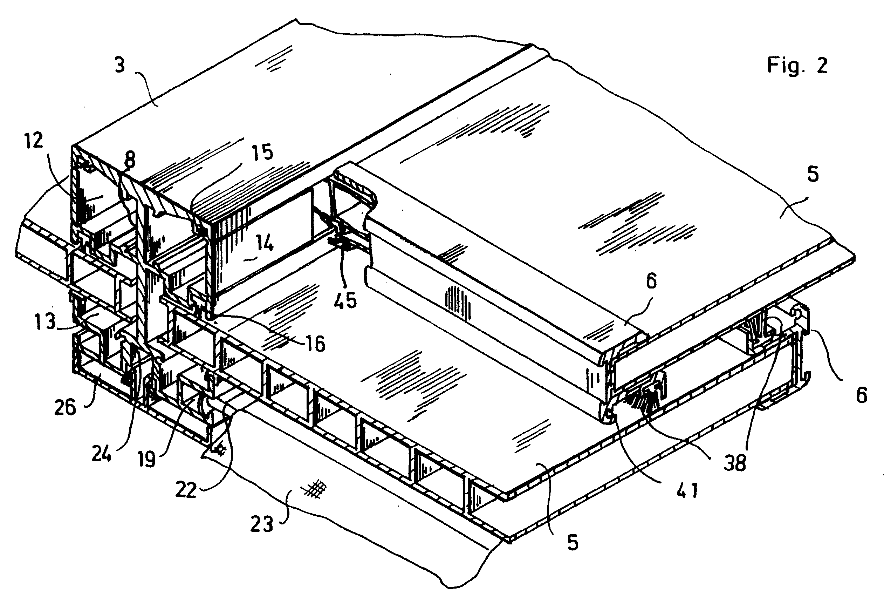

La figure 2 représente l'agencement de deux panneaux contigus. On constate que les extrémités longitudinales du profilé d'accrochage 6 des panneaux 5 fixes sont dotées en sous-face d'une cale 45 venant en butée contre les profilés-chevrons. Cette cale 45, en un matériau compressible, est maintenue en pression contre la face 14 des profilés-chevrons 3 de façon à assurer une étanchéité latérale à l'air.

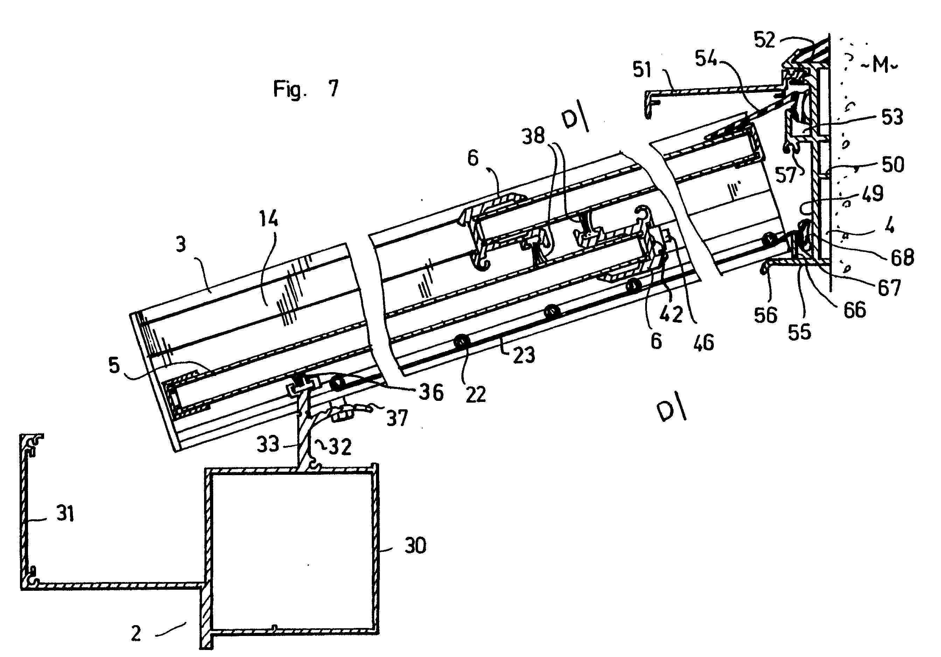

La figure 7 présente en coupe par un plan AA (passant par une ligne de plus grande pente de la toiture) une toiture conforme à l'invention, dans la position de fermeture des panneaux 5 de remplissage et de déploiement du rideau 23. Ces panneaux de remplissage sont portés, chacun, dans une feuillure 12, 13 desprofilés-chevrons 3 qui reposent en partie haute sur l'aile inférieure 55 du profilé mural 4 et en partie basse sur l'extrémité de l'aile-support 32 du profilé de façade. Ces profilés-chevrons 3 sont, en outre, bioqués au moyen de vis vissés dans l'ailette 37 de l'aile-support 32. L'étanchéité de la toiture est assurée :

- en partie basse, par le joint-brosse 36 venant en contact avec la face inférieure du panneau bas,
- au niveau des portions de recouvrement des panneaux haut et bas, par les joints-brosses 38 portés par les profilés d'accrochage 6 coiffant l'extrémité de chacun de ces panneaux et disposés en positions inversées,
- en partie haute, par le joint à lèvre 54 venant en contact avec la face supérieure du panneau haut.

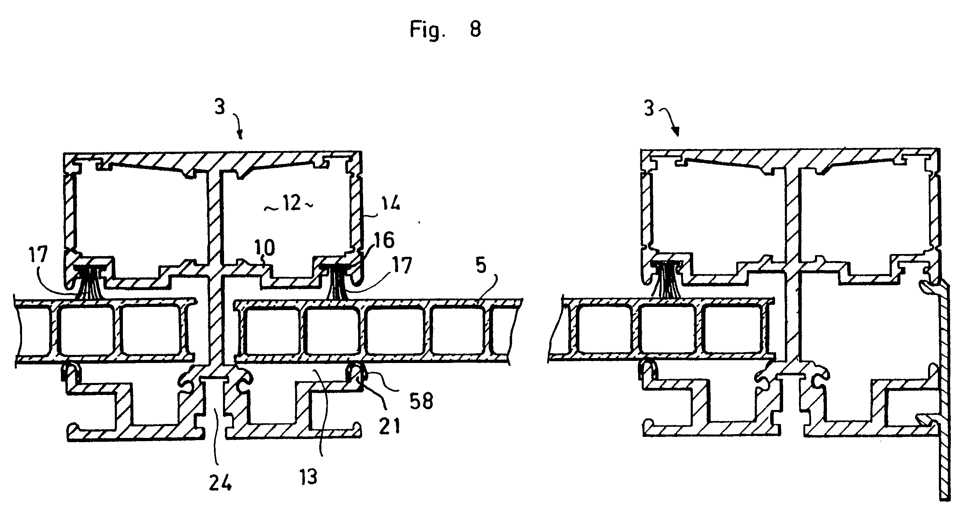

La figure 8 présente en coupe transversale BB, l'agencement des panneaux 5 de remplissage mobiles, à l'intérieur des feuillures inférieures 13 des profilés-chevrons 3. L'étanchéité latérale est assurée, à ce niveau, par les joints-brosses 17 dont les talons sont logés dans les rainures porte-joints 16 situées à l'extrémité des ailettes supérieures 10 délimitant les feuillures inférieures 13.

En outre, le rebord 21 destiné à servir d'appui au panneau mobile est recouvert d'un joint 58 antifriction destiné à éviter la détérioration de ce panneau mobile lors de son coulissement.

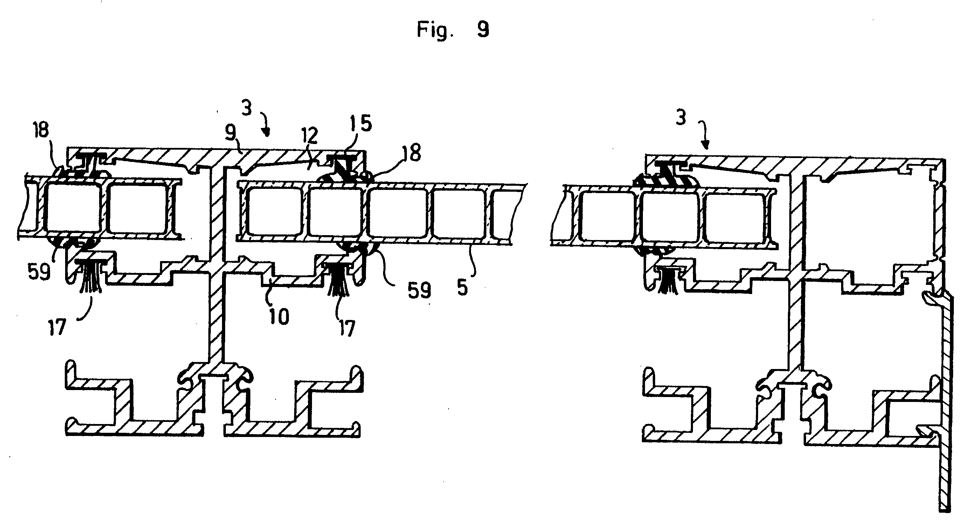

La figure 9 présente en coupe transversale CC, l'agencement des panneaux 5 de remplissage fixes, à l'intérieur des feuillures supérieures 12 des profilés-chevrons 3. L'étanchéité latérale est asurée, à ce niveau, par les joints néoprène 18 dont les talons sont logés dans les rainures 15 porte-joints situées à l'extrémité des ailettes 9 supérieures délimitant la feuillure supérieure 12. Cette étanchéité est complétée par des joints à clé en néoprène 59 disposés entre la face inférieure de ces panneaux fixes et l'ailette 10 délimitant inférieurement la feuillure supérieure 12.

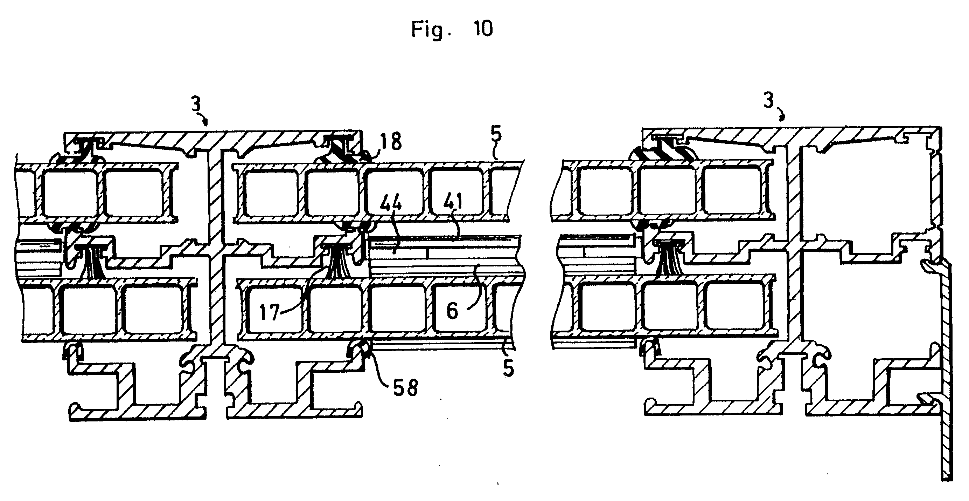

La figure 10 présente en coupe transversale DD, l'agencement des panneaux 5 de remplissage bas, mobiles, au droit de leur portion de recouvrement avec les panneaux hauts, fixes. Les profilés d'accrochage 6 coiffant l'extrémité haute de ces panneaux mobiles possèdent une largeur sensiblement inférieure à la distance entre profilés-chevrons 3 voisins, de façon à permettre le déplacement des panneaux le long de ces profilés-chevrons. Toutefois, lors du coulissement des panneaux, les extrémités longitudinales du profilé d'accrochage 6 peuvent venir en contact avec les profilés-chevrons 3. A cet effet, les extrémités du bourrelet 41 creux du profilé d'accrochage sont dotés de patins de guidage 44 logés partiellement dans ce bourrelet, de façon à venir en appui contre les profilés-chevrons 3.

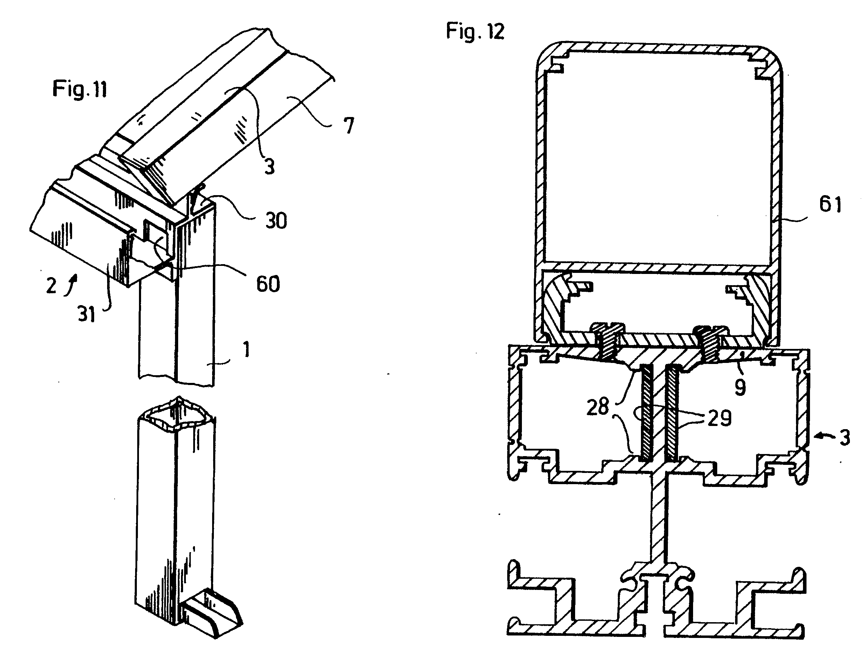

La figure 11 illustre le mode de fixation du profilé de façade 2 sur les éléments porteurs verticaux 1 de façade. Au droit des porteurs verticaux 1, le profil-porteur 30 du profilé de façade 2 qui présente une section rectangulaire, est découpé sur deux faces, de façon à permettre la pénétration de ces porteurs verticaux 1 dans le profil-porteur 30 et leur fixation sur le dièdre lisse formé par les deux autres faces de ce profil-porteur.

En outre, afin de permettre l'évacuation des eaux collectées par la toiture, la face verticale du dièdre et la face avant de l'élément porteur vertical 1 sont percés d'une réservation 60 permettant ainsi d'utiliser l'élément porteur vertical 1 comme descente d'eau pluviale.

Pour des vérandas présentant un pureau de grande hauteur, les profilés-chevrons 3 peuvent être renforcés, d'une part, au moyen des plats 29 définis ci-avant et, d'autre part, au moyen d'un profilé-renfort 61 fixé sur la face supérieure plane du profilé-chevron (figure 12).

Les différents éléments définis ci-avant permettent donc de réaliser des toitures ouvrantes dont le pureau est de plus ou moins grande hauteur. Les moyens de traction (non représentés), permettant de faire coulisser les panneaux de remplissage 5 dans le plan de toiture, peuvent être de tout type, mécanique, électrique ou manuel connu en soi.

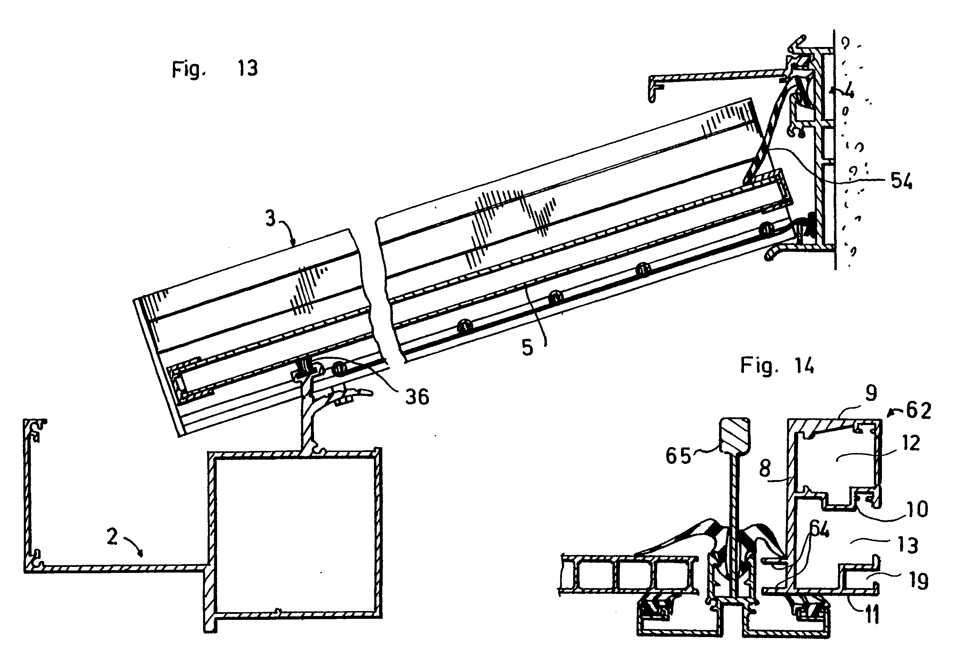

Il est également possible, à partir de ce système de toiture, de réaliser des toitures fixes dont la couverture est constituée de panneaux de remplissage 5 fixes logés dans la feuillure, inférieure 13 ou supérieure 12, des profilés-chevrons 3 (figure 13). Dans ce dernier cas, ces toitures s'apparentent, tant au niveau du coût qu'au niveau du montage, aux toitures existant actuellement.

Une dernière possibilité offerte par ce système de toiture est la transformation des toitures fixes existantes. La méthode consiste alors à utiliser des profilés-auxiliaires 62 comprenant une âme 8 par rapport à laquelle font saillie des ailettes 9, 10, 11 définissant des feuillures 12, 13 superposées.

Ces profilés-auxiliaires comprennent également des moyens de maintien qui sont constitués de deux ailettes 64, dont l'une est disposée à l'extrémité inférieure de l'âme 8, lesdites ailettes 64 faisant saillie par rapport à la face de l'âme 8 opposée aux feuillures 12, 13 et étant espacées d'une distance correspondant à l'épaisseur des panneaux de remplissage de la couverture à transformer.

Ainsi, la transformation consiste à retirer les panneaux de remplissage constituant la couverture existante et à fixer les profilés-auxiliaires 62 sur les profilés 65 existants, de façon à reconstituer de nouveaux profilés-chevrons composés d'un profilé existant et de deux profilés-auxiliaires.

La figure 14 illustre cette application. Elle représente un profilé existant 65 portant d'un côté un profilé-auxiliaire 62 conforme à l'invention et du côté opposé un panneau de remplissage destiné à être retiré et remplacé par un deuxième profilé-auxiliaire 62.

## Revendications

1. Système de toiture, notamment pour véranda, du type comprenant un profilé mural (4) adapté pour être fixé horizontalement contre un support, et une couverture composée de panneaux (5) de remplissage portée par des profilés-chevrons (3) reposant en partie haute sur le profilé mural (4) et en partie basse sur un profilé de façade (2), ledit système de toiture étant caractérisé en ce que :
   - chaque profilé-chevron (3) comprend de part et d'autre d'une âme (8), au moins deux feuillures (12, 13) superposées formées par des ailettes (9, 10, 11) faisant saillie de part et d'autre de ladite âme,
   - au moins deux panneaux (5) de remplissage sont disposés entre deux profilés-chevrons (3) voisins, chacun desdits panneaux pénétrant latéralement dans une feuillure (12, 13) des profilés-chevrons et possédant une hauteur inférieure au pureau de la toiture, de façon qu'au moins un de ces panneaux puisse coulisser le long des profilés-chevrons (3), entre deux positions extrêmes :
      • une position de fermeture où lesdits panneaux (5) s'étendent sur la totalité du pureau de la couverture,

- • une position d'ouverture où, au moins un des panneaux (5) de remplissage s'escamote au moins partiellement au-dessus ou au-dessous du panneau de remplissage contigu,
- des moyens d'étanchéité (54), dits supérieurs, sont interposés entre le profilé mural (4) et un des panneaux de remplissage, dit panneau haut, appelé, en position de fermeture, à se positionner contre ledit profilé mural,
- des moyens d'étanchéité (36), dits inférieurs, sont interposés entre le profilé de façade (2) et un des panneaux de remplissage, dit panneau bas, appelé, en position de fermeture, à se positionner contre ledit profilé de façade,
- des moyens d'étanchéité (38), dits intermédiaires, sont interposés transversalement entre deux panneaux (5) de remplissage contigus,
- des moyens d'étanchéité (17, 18, 45, 59), dits latéraux, sont interposés entre les extrémités latérales des panneaux (5) de remplissage et les profilés-chevrons (3).

2. Système de toiture selon la revendication 1, caractérisé en ce que, en position de fermeture, les panneaux (5) de remplissage contigus sont positionnés de façon à posséder des portions de recouvrement dotées de joints d'étanchéité (38) intermédiaires, par friction, venant en appui avec le panneau (5) situé en vis-à-vis.

3. Système de toiture selon l'une des revendications 1 ou 2, caractérisée en ce que chaque profilé-chevron (3) porte, de part et d'autre de son âme (8), un panneau (5) de remplissage fixe, logé dans une feuillure (12) et au moins un panneau de remplissage (5) mobile par rapport audit panneau fixe et logé dans l' (ou les) autre(s) feuillure(s) (13).

4. Système de toiture selon la revendication 3, caractérisé en ce que les feuillures (12) de chaque profilé-chevron (3) contenant les panneaux de remplissage (5) fixes sont fermées sur la hauteur non occupée par lesdits panneaux de remplissage fixes.

5. Système de toiture selon la revendication 2, caractérisé en ce que :
- de part et d'autre de son âme (8), chaque profilé-chevron (3) comprend deux feuillures superposées (12, 13), portant deux panneaux (5) de remplissage disposés, chacun, dans une feuillure :
  - • un panneau de remplissage haut, fixe,
  - • un panneau de remplissage bas, mobile par rapport au panneau de remplissage bas,
- chacun des panneaux de remplissage, fixe et mobile, possède une hauteur correspondant au demi-pureau de la couverture augmentée de la portion de recouvrement précitée.

6. Système de toiture selon l'une des revendications précédentes, caractérisé en ce qu'il comprend, entre deux profilés-chevrons (3) voisins, un rideau (23) de protection solaire maintenu par au moins une membrure-support (22) dont les extrémités longitudinales sont portées par lesdits profilés-chevrons (3), ledit rideau (23) étant associé à des moyens de déploiement adaptés pour permettre son déploiement suivant un plan parallèle au plan des panneaux (5) de remplissage.

7. Système de toiture selon la revendication 6, caractérisé en ce que chaque profilé-chevron (3) comprend des ailettes (11) inférieures délimitant des rainures (19) adaptées pour loger l'extrémité longitudinale de chaque membrure-support (22) du rideau de protection (23).

8. Système de toiture selon l'une des revendications précédentes caractérisé en ce qu'il comprend, associé à chaque profilé-chevron (3) positionné en rive de toiture, un profilé (7) d'extrémité de forme adaptée pour fermer chaque feuillure (13) externe desdits profilés-chevrons de rive.

9. Système de toiture selon l'une des revendications précédentes, caractérisé en ce que l'âme (8) de chaque profilé-chevron (3) est dotée à son extrémité inférieure d'une rainure (24) s'ouvrant en sous-face dudit profilé-chevron et possédant des alvéoles (25) adaptés pour permettre la fixation sous le profilé-chevron (3), d'un profilé-bac (26) de récupération des eaux de condensation de la toiture.

10. Système de toiture selon l'une des revendications précédentes, caractérisé en ce que chaque feuillure (12, 13) est dotée au niveau, de l'ailette supérieure (9, 10) qui la délimite, d'une rainure (15, 16) porte-joint dans laquelle est disposé un joint d'étanchéité (17, 18) latérale venant en appui contre la face supérieure du panneau (5) logé dans ladite feuillure.

11. Système de toiture selon la revendication 2, caractérisé en ce que chaque panneau (5) de remplissage comprend au niveau de sa portion de recouvrement un profilé (6) d'accrochage coiffant l'extrémité de ladite portion et portant les joints (38) d'étanchéité intermédiaires.

12. Système de toiture selon la revendication 11, caractérisé en ce que les profilés d'accrochage (6) positionnés aux extrémités respectivement haute et basse de deux panneaux (5) de remplissage contigus, sont identiques et disposés en positions inversées de façon que les joints (38) d'étanchéité intermédiaires portés par chacun de ces profilés (6) se trouvent en regard du panneau (5) situé en vis-à-vis.

13. Système de toiture selon l'une des revendications 11 ou 12, caractérisé en ce que chaque profilé d'accrochage (6) présente la forme d'un U possédant une aile (39) dotée d'une rainure (40) porte-joint dans laquelle est logé le joint d'étanchéité intermédiaire (38).

14. Système de toiture selon la revendication 13, caractérisé en ce que le profilé d'accrochage (6) d'un panneau (5) de remplissage mobile comprend une âme (43) dotée du côté externe d'un bourrelet (41) creux contenant des patins de guidage (44) latéraux venant en appui contre les profilés-chevrons (3).

15. Système de toiture selon la revendication 13, caractérisé en ce que le profilé d'accrochage (6) d'un panneau (5) de remplissage fixe porte des moyens d'étanchéité latérale constitués par une cale (45) en un matériau compressible maintenue en pression contre les profilés-chevrons (3).

16. Système de toiture selon la revendication 14, caractérisé en ce que les profilés d'accrochage (6) des panneaux de remplissage (5) mobiles comprennent des moyens de verrouillage (42, 46) adaptés pour bloquer lesdits panneaux dans des positions données lors de leur coulissement.

17. Système de toiture selon la revendication 16, caractérisé en ce que les moyens de verrouillage sont composés :
   - d'une rainure (42) située sur la face externe de l'âme (43) du profilé d'accrochage (6),
   - d'un verrou (46) de forme adaptée pour coulisser à l'intérieur de ladite rainure (42),
   - d'au moins un alésage pratiqué dans l'âme (8) des profilés-chevrons (3) de façon à servir de logement à une extrémité du verrou (46) précité.

18. Système de toiture selon la revendication 3, caractérisé en ce qu'il comprend un joint (58) anti-friction interposé au niveau de la surface de contact entre les feuillures (13) des profilés-chevrons (3) et chaque panneau (5) de remplissage mobile.

19. Système de toiture selon l'une des revendications précédentes, caractérisé en ce que le profilé de façade (2) comprend, d'un seul tenant :
   - un profil-porteur (30) s'étendant entre les éléments porteurs verticaux (1) de façade,
   - un profil-chéneau (31) juxtaposé latéralement au profil-porteur (30) et formant canal d'écoulement des eaux collectées par la toiture,
   - une aile-support (32) faisant saillie au-dessus du profil-porteur (30) et destinée à servir d'appui aux profilés-chevrons (3).

20. Système de toiture selon la revendication 19, dans lequel l'aile-support (32) du profilé de façade (2) comprend :
   - des moyens d'étanchéité inférieure constitués d'une rainure (35) disposée à l'extrémité supérieure (34) de cette aile-support (32) et dans laquelle est logé un joint (36) adapté pour venir en contact avec la face inférieure du panneau de remplissage (5) bas,
   - une ailette (37) s'étendant selon le plan de toiture et portant des moyens de fixation des profilés-chevrons (3) sur le profilé de façade (2).

21. Système de toiture selon la revendication 20, caractérisé en ce que l'extrémité supérieure (34) de l'aile-support (32) est découpable de façon à permettre l'appui des profilés-chevrons (3) sur l'extrémité de l'aile-support (32) ainsi raccourcie.

22. Système de toiture selon l'une des revendications 18, 19, 20 ou 21, caractérisé en ce que le profil-porteur (30) des profilés de façade (2) présente une section rectangulaire et est découpé sur deux faces, au droit des éléments porteurs verticaux (1), de façon à permettre la pénétration dudit élément porteur vertical (1) dans le profil-porteur (30) et sa fixation contre le dièdre formé par les deux autres faces dudit profil-porteur.

**23.** Système de toiture selon l'une des revendications précédentes, notamment pour véranda présentant un pureau de grande hauteur, caractérisé en ce que chaque profilé-chevron (3) présente une face supérieure (9) plane équipée d'un profilé-renfort (61) fixé sur celle-ci.

**24.** Profilé-chevron spécialement conçu pour la réalisation d'une toiture conforme à l'une des revendications précédentes, caractérisé en ce qu'il comprend une âme (8) de part et d'autre de laquelle font saillie, des ailettes (9, 10, 11) définissant au moins deux feuillures (12, 13) superposées.

**25.** Profilé-chevron selon la revendication 24, caractérisé en ce qu'il comprend, de part et d'autre de l'âme (8), deux feuillures, supérieure et inférieure :
   - une feuillure inférieure (13) ouverte d'origine,
   - une feuillure supérieure (12) fermée par une paroi (14) découpable, susceptible d'être découpée sur une longueur désirée.

**26.** Profilé-chevron selon la revendication 25, caractérisé en ce qu'il comprend les caractéristiques des profilés-chevrons définis aux revendications 7, 9, 10.

**27.** Profilé-chevron selon l'une des revendications 25 ou 26, caractérisé en ce que les faces en regard des ailettes (9, 10) délimitant la feuillure supérieure (12) sont dotées au voisinage de l'âme (8) de nervures (28) formant des gorges pour la mise en place de plats (29) destinés à augmenter l'inertie des profilés-chevrons (3).

**28.** Demi-profilé-chevron spécialement conçu pour constituer un profilé-chevron de rive ou pour permettre par juxtaposition de deux desdits demi-profilés-chevrons, la fabrication de profilés-chevrons conforme à l'une des revendications 24 à 27, ledit demi-profilé-chevron étant caractérisé en ce qu'il comprend une âme d'un côté de laquelle font saillie des ailettes définissant au moins deux feuillures superposées.

**29.** Profilé-auxiliaire (62) spécialement conçu pour la transformation de toitures existantes dotées de chevrons classiques, et réaliser un système de toiture conforme à l'une des revendications 1 à 23 et caractérisé en ce qu'il comprend :
   - une âme (8) d'un côté de laquelle font saillie des ailettes (9, 10, 11) définissant au moins deux feuillures superposées (12, 13),
   - des moyens de maintien (64) dudit profilé (62) sur un chevron existant.

**30.** Profilé-auxiliaire (62) selon la revendication 29, caractérisé en ce que les moyens de maintien dudit profilé sur un chevron existant sont constitués de deux ailettes (64) dont l'une est disposée à l'extrémité inférieure de l'âme (8), lesdites ailettes (64) faisant saillie par rapport à la face de l'âme (8) opposée aux feuillures (12, 13) et étant espacées d'une distance correspondant à l'épaisseur des panneaux de remplissage de la couverture à transformer.

**31.** Profilé de façade (2) spécialement conçu pour la réalisation d'une toiture conforme à la revendication 19, et caractérisé en ce qu'il comprend, d'un seul tenant :
   - un profil-porteur (30) destiné à s'étendre entre les éléments porteurs verticaux (1) de façade,
   - un profil-chéneau (31) juxtaposé latéralement au profil-porteur (30) et destiné à former un canal d'écoulement des eaux collectées par la toiture,
   - une aile-support (32) faisant saillie au-dessus du profil-porteur (30) et destinée à servir d'appui aux profilés-chevrons (3), ladite aile-support (32) comprenant :
   - une extrémité supérieure (34) découpable, terminée par une rainure (35) apte à loger le talon d'un joint (36) destiné à venir en contact avec la face inférieure d'un panneau (5) de remplissage bas,
   - une ailette (37) s'étendant selon le plan de toiture et portant des moyens de fixation du profilé-chevron (3) sur le profilé de façade (2).

**32.** Profilé d'accrochage (6) spécialement conçu pour la réalisation d'une toiture conforme à la revendication 11, et caractérisé en ce qu'il présente la forme d'un U possédant une aile (39) dotée d'une rainure externe (40) porte-joint, et une âme (43) dotée, du côté externe, d'un bourrelet (41) creux et d'une rainure (42) située sur la face externe de ladite âme.

**Claims**

**1.** Sliding-roof system, especially for a veranda, comprising a wall-profile (4) adapted to be secured horizontally on a support, and a cover consisting of filling panels (5) carried by rafter-profiles (3) resting, in the higher section, on the wall-profile and, in the lower section, on a front-profile (2), with said sliding-roof system being characterised in that :

- each rafter-profile (3) comprises, on either side of a web (8), at least two superposed rabbets (12, 13) formed by fins (9, 10, 11) projecting from either side of said web,
- at least two filling panels (5) are arranged between two contiguous rafter-profiles (3), with each of said panels penetrating sideways into a rabbet (12, 13) of the rafter-profiles and displaying a height smaller than the uncovered surface area of the roofing so as at least one of these panels can slide along the rafter-profiles (3) between two extreme positions:
  * a close position, in which said panels (5) extend over the whole uncovered surface area of the roofing,
  * an open position, in which at least one of the filling panels (5) folds back at least partly above and underneath the contiguous filling panel,
- so-called upper sealing means (54) are arranged between the wall-profile (4) and one of the filling panels, a so-called higher panel, intended, in the closed position, to position itself against said wall-profile,
- so-called lower sealing means (36) are arranged between the front-profile (2) and one of the filling panels, a so-called lower panel, intended, in the closed position, to position itself against said front-profile,
- so-called intermediary sealing means (38) are arranged transversally between two contiguous filling panels (5),
- so-called lateral sealing means (17, 18, 45, 59) are arranged between the lateral ends of the filling panels (5) and the rafter-profiles (3).

2. Sliding-roof system according to claim 1, characterised in that in the closed position the contiguous filling panels (5) are positioned so as to have overlapping portions provided with frictional intermediary gaskets (38) resting on the facing panel (5).

3. Sliding-roof system according to one of the claims 1 or 2, characterised in that each rafter-profile (3) carries, on either side of its web (8), one fixed filling panel (5) lodged in a rabbet (12) and at least one filling panel (5) displaceable relative to said fixed panel and lodged in the other rabbet(s) (13).

4. Sliding-roof system according to claim 3, characterised in that the rabbets (12) of each rafter-profile (3) containing the fixed filling panels (5) are shut over the non-occupied height through said fixed filling panels.

5. Sliding-roof system according to claim 2, characterised in that :
- on either side of its web (8), each rafter-profile (3) comprises two superposed rabbets (12, 13) carrying two filling panels (5) each of which is arranged in a rabbet :
  * a fixed higher filling panel,
  * a lower filling panel, displaceable with respect to the higher filling panel,
- each of the fixed and displaceable filling panels has a height corresponding to the half of the uncovered surface area of the roofing increased by the aforesaid overlapping portion.

6. Sliding-roof system according to one of the preceeding claims, characterised in that it comprises, between two neighbouring rafter-profiles (3), a sun protection curtain (23) contained by at least one support belt (22), the longitudinal ends of which are carried by said rafter-profiles (3), said curtain (23) being associated with unfolding means adapted so as to allow for its unfolding along a plane parallel to the plane of the filling panels (5).

7. Sliding-roof system according to claim 6, characterised in that each rafter-profile (3) comprises lower fins (11) delimiting grooves (19) adapted so as to lodge the longitudinal end of each support belt (22) of the protection curtain (23).

8. Sliding-roof system according to one of the preceeding claims, characterised in that it comprises, associated with each rafter-profile (3) positioned on the edge of the roofing, an end-profile (7) the shape of which is adapted so as to shut each outer rabbet (13) of said terminal rafter-profiles.

9. Sliding-roof system according to one of the preceeding claims, characterised in that the web (8) of each rafter-profile (3) is provided, at its lower end, with a groove (24) opening itself underneath said rafter-profile and displaying cavities (25) the shape of which is adapted so as to allow for attaching, under the rafter-profile (3), a tub-profile (26) for collecting the condensation water from the roofing.

10. Sliding-roof system according to one of the preceeding claims, characterised in that each rabbet (12, 13) is provided, at the upper fin (9, 10) that delimits it, with a gasket-holding groove (15, 16) inside which is arranged a lateral gasket (17, 18) resting on the upper side of the panel (5) lodged in said rabbet.

11. Sliding-roof system according to claim 2, characterised in that each filling panel (5) comprises, at the level of its overlapping portion, a hitch profile (6) covering the end of said portion and carrying the intermediary gaskets (38).

12. Sliding-roof system according to claim 11, characterised in that the hitch profiles (6) positioned at the higher lower ends, respectively, of two contiguous filling panels (5) are identical and arranged in reversed positions so as the intermediary gaskets (38) carried by each of these profiles (6) face the opposite panel (5).

13. Sliding-roof system according to one of the claims 11 or 12, characterised in that each hitch profile (6) displays the form of a U having a wing (39) provided with a gasket-holding groove (40) inside which the intermediary gasket (38) is arranged.

14. Sliding-roof system according to claim 13, characterised in that the hitch profile (6) of a displaceable filling panel (5) comprises a web (43) provided, on the external side, with a hollow dome (4I) containing lateral sliding shoes (44) resting on the rafter-profiles (3).

15. Sliding-roof system according to claim 13, characterised in that the hitch profile (6) of a fixed filling panel (5) carries lateral sealing means consisting of a block (45) of compressible material kept under pressure against the rafter-profiles (3).

16. Sliding-roof system according to claim 14, characterised in that the hitch profiles (6) of the displaceable filling panels (5) comprise locking means (42, 46)-adapted so as to lock said panels in given positions when sliding.

17. Sliding-roof system according to claim 16, characterised in that the locking means consist of
 - a groove (42) located on the outer side of the web (43) of the hitch profile (6),
 - a bolt (46), the shape of which is adapted so as to slide inside said groove (42),
 - at least one bore made in the web (8) of the rafter-profiles (3) so as to serve as a housing for an end of the aforesaid bolt (46).

18. Sliding-roof system according to claim 3, characterised in that it comprises an antifriction joint (58) placed at the contact surface area between the rabbets (13) of the rafter-profiles (3) and each displaceable filling panel (5).

19. Sliding-roof system according to one of the preceeding claims, characterised in that the front-profile (2) comprises, in one block :
 - a bearing profile (30) extending between the vertical bearing members (1) of the front,
 - an eaves-profile (31) placed laterally side by side with the bearing profile (30) and forming a throughflow flume for water collected by the roof,
 - a support wing (32) projecting above the bearing profile (30) and intended to serve as a bearing for the rafter-profiles (3).

20. Sliding-roof system according to claim 19, in which the support wing (32) of the front-profile (2) comprises:
 - lower sealing means consisting of a groove (35) made at the upper end (34) of this support wing (32) and inside which a gasket (36) intended to come into contact with the lower side of the lower filling panel (5) is lodged,
 - a fin (37) extending according to the plane of the roofing and carrying means for securing the rafter-profiles (3) to the front-profile (2).

21. Sliding-roof system according to claim 20, characterised in that the upper end (34) of the support wing (32) may be cut off so as to allow for supporting the rafter-profiles (3) on the end of the support wing (32) thus reduced in length.

22. Sliding-roof system according to one of the claims 18, 19, 20 or 2I, characterised in that the bearing profile (30) of the front-profiles (2) displays a rectangular section and is cut on two faces perpendicularly to the vertical bearing members (1) so as to allow for penetration of said vertical bearing member (1) into the bearing profile (30) and its securing on the diedral formed by the two other faces of said bearing profile.

23. Sliding-roof system according to one of the preceeding claims, particularly for a veranda with high uncovered surface area, characterised in that each rafter profile (3) displays a plane upper side (9) fitted with a reinforcement profile (61) secured on it.

24. Rafter-profile especially designed for making a roof according to one of the preceeding claims, characterised in that it comprises a web (8), on either side of which fins (9, 10, 11) delimiting at least two superposed rabbets (12, 13) are projecting.

25. Rafter-profile according to claim 24, characterised in that it comprises, on either side of the web (8), two rabbets, an upper one and a lower one :
  - one originally open lower rabbet (13),
  - one upper rabbet (12) shut by a wall (14), that may be cut over a desired length,

26. Rafter-profile according to claim 25, characterised in that it has all the characteristics of the rafter-profiles defined in the claims 7, 9, 10.

27. Rafter-profile according to one of the claims 25 or 26, characterised in that the opposite sides of the fins (9, 10) delimiting the upper rabbet (12) are provided, at the near of the web (8), with ribs (28) forming grooves for the placing of flat profiles (29) intended to increase the inertie of the rafter-profiles (3).

28. Half rafter-profile, especially designed for forming a terminal rafter-profile or for allowing, through juxtaposition of two of said half rafter-profiles, for making rafter-profiles according to one of the claims 24 to 27, said half rafter-profile being characterised in that it comprises a web from which fins delimiting at least two superposed rabbets are projecting.

29. Auxiliary profile (62), especially designed for transforming existing roofings provided with classical rafters and for making a sliding-roof system according to one of the claims 1 to 23, and characterised in that it comprises:
  - one web (8), from one side of which fins (9, 10, 11) delimiting at least two superposed rabbets (12, 13) are projecting,
  - means (64) for securing said profile (62) on an existing rafter.

30. Auxiliary profile (62) according to claim 29, characterised in that the means for securing said profile on an existing rafter consist of two fins (64), one of which is arranged at the lower end of the web (8), said fins (64) projecting with respect to the side of the web (8) opposite to the rabbets (12, 13) and being separated by a distance corresponding to the thickness of the filling panels of the roofing intended to be transformed.

31. Front-profile (2) especially intended to make a roofing according to claim 19, and characterised in that it comprises, in one block :
  - a bearing profile (30) designed for extending between the vertical bearing members (1) of the frontage,
  - an aveas-profile (31) placed laterally, side by side with the bearing profile (30) and intended to form a throughflow flume for water collected by the roofing,
  - a support wing (32) projecting underneath the bearing profile (30) and intended to serve as a bearing for the rafter-profiles (3), with said support wing (32) comprising :
  - an upper end (34) that may be cut, terminated by a groove (35) capable of lodging the heel of a joint (36) intended to come into contact with the lower face of a lower filling panel (5),
  - a fin (37) extending following to the plane of the roofing and carrying means for securing the rafter-profile on the front-profile (2).

32. Hitch profile (6), especially intended to make a sliding-roof according to claim 11, and characterised in that it displays the shape of a U having a wing (39) provided with an external gasket-holding groove (40), and a web (43) provided, on the outside, with a hollow dome (41) and a groove (42) located on the external face of said web.

**Ansprüche**

1. Schiebedach, insbesondere für Veranda, mit einem Wandprofil (4), das dazu ausgebildet ist, um waagerecht an einer Stütze befestigt zu werden, und mit einer aus Füllplatten (5) bestehenden Abdeckung, die durch oben auf einem Wandprofil (4) und unten auf einem Fassadenprofil (2) beruhenden Sparrenprofile (3) getragen ist, dadurch gekennzeichnet, daß :
  - jedes Sparrenprofil (3) auf beiden Seiten eines Stegs (8) mindestens zwei übereinanderliegende, durch beidseitig des Stegs vorstehende Flansche (9, 10, 11) gebildete Falze (12, 13) umfaßt,
  - mindestens zwei Füllplatten (5) zwischen zwei benachbarten Sparrenprofilen (3) angeordnet sind, wobei jede eine der Platten seitlich in einen Falz (12, 13) der Sparrenprofile eindringt und eine Höhe besitzt, die kleiner als die abdeckungsfreie Fläche der Bedachung, dergestalt, daß mindestens eine dieser Platten entlang der Sparrenprofile (3) zwischen zwei äußersten Stellungen verschiebbar ist, und zwar :

- • einer geschlossenen Stellung, in der sich die Platten (5) über die ganze abdeckungsfreie Fläche der Bedachung erstrecken,
- • einer offenen Stellung, in der mindestens eine der Füllplatten (5) zumindest teilweise über der angrenzenden Füllplatte aufklappbar bzw. unter dieser Platte einklappbar ist,
- sogenannte obere Abdichtungsmittel (54) zwischen dem Wandprofil (4) und einer der Füllplatten, einer sogenannten unteren Platte, die dazu bestimmt ist, in der geschlossenen Stellung am Wandprofil zu liegen, angeordnet sind,
- sogenannte untere Abdichtungsmittel (36) zwischen dem Fassadenprofil (2) und einer der Füllplatten, einer sogenannten unteren Platte, die dazu bestimmt ist, am Fassadenprofil zu liegen, angeordnet sind,
- sogenannte Zwischenabdichtungsmittel (38) quer zwischen zwei aneinandergrenzenden Füllplatten (5) angeordnet sind,
- sogenannte seitliche Abdichtungsmittel (17, 18, 45, 59) zwischen den seitlichen Enden der Füllplatten (5) und den Sparrenprofilen (3) angeordnet sind.

2. Schiebedach nach Anspruch 1, dadurch gekennzeichnet, daß in geschlossener Stellung die aneinandergrenzenden Füllplatten (5) so angeordnet sind, daß sie mit kraftschlüssigen Zwischendichtungen (38) versehene Überlappungsabschnitte besitzen, die an der gegenüberliegenden Platte (5) anzuliegen kommen.

3. Schiebedach nach einem der Ansprüche 1 oder 2, dadurch gekennzeichnet, daß jedes Sparrenprofil (3) beidseitig seines Stegs (8) eine innerhalb eines Falzes (12) aufgenommene feststehende Füllplatte (5) und mindestens eine gegenüber der feststehenden Platte bewegliche und in dem bzw. in den anderen Falzen (13) aufgenommene Füllplatte (5) trägt.

4. Schiebedach nach Anspruch 3, dadurch gekennzeichnet, daß die Falze (12) jedes die feststehenden Füllplatten (5) enthaltenden Sparrenprofils (3) auf der durch die feststehenden Füllplatten nicht besetzten Höhe abgeschlossen sind.

5. Schiebedach nach Anspruch 2, dadurch gekennzeichnet, daß :
- jedes Sparrenprofil (3) beidseitig seines Stegs (8) zwei übereinanderliegende Falze (12, 13) umfaßt, die zwei Füllplatten (5) tragen, wovon jede in einem Falz angeordnet ist, und zwar :
  - • eine obere, feststehende Füllplatte,
  - • eine untere, gegenüber der oberen Füllplatte bewegliche Füllplatte,
- jede feststehende bzw. bewegliche Füllplatte eine Höhe aufweist, die der halben abdeckungsfreien Fläche der Bedachung zuzüglich des vorerwähnten Überlappungsabschnitts entspricht.

6. Schiebedach nach einem der vorstehenden Ansprüche, dadurch gekennzeichnet, daß es zwischen zwei benachbarten Sparrenprofilen (3) einen Sonnenschutzvorhang (23) umfaßt, der durch mindestens einen Haltegurt (22) gehalten wird, dessen Längsenden durch die Sparrenprofile (3) getragen wird, wobei der Vorhang (23) mit Ausbreitungsmitteln verbunden ist, die dazu ausgebildet sind, seine Ausbreitung in einer zur Ebene der Füllplatten (5) parallel verlaufenden Ebene zu ermöglichen.

7. Schiebedach nach Anspruch 6, dadurch gekennzeichnet, daß jedes Sparrenprofil (3) untere Flansche (11) umfaßt, die Nuten (19) begrenzen, die zur Aufnahme des Längsendes jedes Haltegurtes (22) des Schutzvorhangs (23) angepaßt sind.

8. Schiebedach nach einem der vorstehenden Ansprüche, dadurch gekennzeichnet, daß es in Verbindung mit jedem am Rande der Bedachung anliegenden Sparrenprofil (3) ein Endprofil (7) umfaßt, dessen Form zum Abschließen jedes äußeren Falzes (13) der am Rande anliegenden Sparrenprofile angepaßt ist.

9. Schiebedach nach einem der vorstehenden Ansprüche, dadurch gekennzeichnet, daß der Steg (8) jedes Sparrenprofils (3) an seinem unteren Ende mit einer Nute (24) versehen ist, die sich an der Unterseite des Sparrenprofils öffnet und Zellen (25) besitzt, die dazu ausgebildet sind, die Befestigung eines Behälter-Profils (26) zum Sammeln des Kondenswassers der Bedachung unter dem Sparrenprofil (3) zu ermöglichen.

10. Schiebedach nach einem der vorstehenden Ansprüche, dadurch gekennzeichnet, daß jeder Falz (12, 13) an dem sie begrenzenden oberen Flansch (9, 10) mit einer Nute (15, 16) zur Aufnahme einer Dichtung versehen ist, in welcher eine seitliche Dichtung (17, 18) angebracht ist, die an der Oberseite der in dem Falz aufgenommenen Platte (5) anzuliegen kommt.

11. Schiebedach nach Anspruch 2, dadurch gekennzeichnet, daß jede Füllplatte (5) an seinem Überlappungsabschnitt ein Anhakprofil (6) umfaßt, das das Ende des Abschnitts abdeckt und die Zwischendichtungen (38) trägt.

12. Schiebedach nach Anspruch 11, dadurch gekennzeichnet, daß die am oberen bzw. unteren Ende von zwei aneinander-grenzenden Füllplatten (5) anliegenden Anhakprofile (6) ähnlich sind und so in umgekehrter Stellung angeordnet sind, daß die an jedem dieser Profile (6) angebrachten Zwischendichtungen (38) zur gegenüberliegenden Platte (5) gerichtet sind.

13. Schiebedach nach einem der Ansprüche 11 oder 12, dadurch gekennzeichnet, daß jedes Anhakprofil (6) die Form eines U aufweist, das einen Schenkel (39) besitzt, der mit einer Nute (40) zur Aufnahme einer Dichtung versehenen ist, in welcher die Zwischendichtung (38) aufgenommen ist.

14. Schiebedach nach Anspruch 13, dadurch gekennzeichnet, daß das Anhakprofil (6) einer beweglichen Füllplatte (5) einen Steg (43) umfaßt, der außenseitig mit einem hohlen Wulst (41) versehen ist, der seitliche, zur Anlage an den Sparrenprofilen (3) kommende Führungsschuhe (44) enthält.

15. Schiebedach nach Anspruch 13, dadurch gekennzeichnet, daß das Anhakprofil (6) einer feststehenden Füllplatte (5) Mittel zur seitlichen Abdichtung trägt, die aus einem auf den Sparrenprofilen (3) unter Druck gehaltenen Klotz (45) aus zusammendrückbarem Material bestehen.

16. Schiebedach nach Anspruch 14, dadurch gekennzeichnet, daß die Anhakprofile (6) der beweglichen Füllplatten (5) Verriegelungsmittel (42, 46) umfassen, die dazu ausgebildet sind, die Platten bei ihrer Verschiebung in bestimmten Stellungen zu blockieren.

17. Schiebedach nach Anspruch 16, dadurch gekennzeichnet, daß die Verriegelungsmittel aus folgendem bestehen :
- einer sich an der Außenseite des Stegs (43) des Anhakprofils (6) erstreckenden Nute (42),
- einem Riegelbolzen (46), dessen Form zur Verschiebung innerhalb der Nut (42) angepaßt ist,
- mindestens einer in dem Steg (8) der Sparrenprofile (3) hergestellten Bohrung, so daß sie als Aufnahme für ein Ende des vorgenannten Riegelbolzens (46) dienen kann.

18. Schiebedach nach Anspruch 3, dadurch gekennzeichnet, daß sie eine an der Berührungsfläche zwischen den Falzen (13) der Sparrenprofile (3) und jeder beweglichen Füllplatte (5) angeordnete Antifriktionsdichtung (58) umfaßt.

19. Schiebedach nach einem der vorstehenden Ansprüche, dadurch gekennzeichnet, daß das Fassadenprofil (2) einstückig folgendes, umfaßt :
- ein sich zwischen den vertikalen Tragelementen (1) der Fassade erstreckendes Tragprofil (30),
- ein seitlich neben dem Tragprofil (30) gelegtes und eine Abflußrinne für das durch die Bedachung gesammelte Wasser bildendes Rinnenprofil (31),
- einen über dem Tragprofil (30) herausragende und zur Abstützung der Sparrenprofile (3) bestimmten Halteflügel (32).

20. Schiebedach nach Anspruch 19, bei dem der Halteflügel (32) des Fassadenprofils (2) folgendes umfaßt :
- untere Abdichtungsmittel, die aus einer Nute (35) bestehen, die am oberen Ende (34) dieses Halteflügels (32) angeordnet ist und in welcher eine Dichtung (36) aufgenommen ist, die dazu ausgebildet ist, zur Anlage an der Unterseite der unteren Füllplatte (5) zu kommen,
- einen Flansch (37), der sich entsprechend der Bedachungsebene erstreckt und Mittel zur Befestigung der Sparrenprofile (3) am Fassadenprofil (2) trägt.

21. Schiebedach nach Anspruch 20, dadurch gekennzeichnet, daß das obere Ende (34) des Halteflügels (32) abgeschnitten werden kann, um die Abstützung der Sparrenprofile (3) an dem so abgekürzten Halteflügel (32) zu ermöglichen.

22. Schiebedach nach einem der Ansprüche 18, 19, 20 oder 21, dadurch gekennzeichnet, daß das Tragprofil (30) der Fassadenprofile (2) einen rechteckigen Querschnitt aufweist und auf zwei Seiten senkrecht zu den vertikalen Tragelementen (1) abgeschnitten ist, um das Eingreifen des vertikalen Tragelements(1) in das Tragprofil (30) und seine Befestigung an dem von den zwei anderen Seiten des Tragprofils gebildeten Dieder zu ermöglichen.

23. Schiebedach nach einem der vorstehenden Ansprüche, insbesondere für Veranda mit sehr hoher abdeckungsfreier Fläche, dadurch gekennzeichnet, daß jedes Sparrenprofil (3) eine obere ebene Seite (9) aufzeigt, die mit einem an dieser befestigten Verstärkungsprofil (61) bestückt ist.

24. Besonders zur Herstellung eines Schiebedachs nach einem der vorstehenden Ansprüche ausgebildetes Sparrenprofil, dadurch gekennzeichnet, daß es einen Steg (8) umfaßt, wovon beidseitig Flansche (9, 10, 11) vorspringen, die mindestens zwei übereinanderliegende Falze (12, 13) bestimmen.

25. Sparrenprofil nach Anspruch 24, dadurch gekennzeichnet, daß es beidseitig des Stegs (8) zwei Falze, einen oberen und einen unteren umfaßt :
    - einen ursprünglich offenen unteren Falz (13),
    - einen durch eine abtrennbare Wandung (14) abgeschlossenen oberen Falz (12), der über eine erwünschte Länge abgeschnitten werden kann.

26. Sparrenprofil nach Anspruch 25, dadurch gekennzeichnet, daß es die Merkmale der in den Ansprüchen 7, 9, 10 definierten Sparrenprofile besitzt.

27. Sparrenprofil nach einem der Ansprüche 25 oder 26, dadurch gekennzeichnet, daß die gegenüber den den oberen Falz (12) abgrenzenden Flanschen (9, 10) liegenden Seiten im Nahbereich des Stegs (8) mit Rippen (28) versehen sind, die Einkehlungen zum Anbringen von Flachprofilen (29) bilden, die dazu ausgebildet sind, die Trägheit der Sparrenprofile (3) zu erhöhen.

28. Sparrenprofilhälfte, die besonders dazu ausgebildet ist, ein Abschlußsparrenprofil zu bilden oder die Herstellung der Sparrenprofile nach einem der Ansprüche 24 bis 27 durch Nebeneinanderlegen zweier der Sparrenprofilhälften zu ermöglichen, dadurch gekennzeichnet, daß sie einen Steg umfaßt, von dessen einer Seite mindestens zwei übereinanderliegende Falze abgrenzende Flansche hervorstehen.

29. Hilfsprofil (62), das dazu besonders ausgebildet ist, bestehende Bedachungen mit herkömmlichen Sparren umzubauen und ein Schiebedach nach einem der Ansprüche 1 bis 23 herzustellen, und das dadurch gekennzeichnet ist, daß es folgendes umfaßt:
    - einen Steg (8), von dessen einer Seite Flansche (9, 10, 11) ausragen, die mindestens zwei übereinanderliegende Falze (12, 13) abgrenzen,
    - Sicherungsmittel (64) des Profils (62) an einem bestehenden Sparren.

30. Hilfsprofil (62) nach Anspruch 29, dadurch gekennzeichnet, daß die Sicherungsmittel des Profils an einem bestehenden Sparren aus zwei Flanschen (64) bestehen, wovon einer am unteren Ende des Stegs (8) angeordnet ist, wobei die Flansche (64) gegenüber der den Falzen (12, 13) entgegengesetzten Seite des Stegs (8) herausragen und in einem Abstand voneinander stehen, der der Dicke der Füllplatten der umzubauenden Bedachung entspricht.

31. Fassadenprofil (2), das besonders zur Herstellung eines Schiebedachs nach Anspruch 19 ausgebildet und dadurch gekennzeichnet ist, daß es einstückig aus folgendem besteht :
    - einem Tragprofil (30), das dazu ausgebildet ist, sich zwischen den vertikalen Tragelementen (1) der Fassade zu erstrecken,
    - einem seitlich neben dem Tragprofil (30) gelegten Rinnenprofil (31), das dazu bestimmt ist, eine Abflußrinne für das durch die Bedachung gesammelte Wasser zu bilden,
    - einem über dem Tragprofil (30) ragenden Halteflügel (32), der dazu bestimmt ist, als Stütze für die Sparrenprofile (3) zu dienen, wobei der Halteflügel (32) folgendes umfaßt:
    - ein abschneidbares oberes Ende (34), das von einer Nute (35) beendet wird, welche die Nase einer Dichtung (36) aufnehmen kann, die dazu ausgebildet ist, zur Anlage an der Unterseite einer unteren Füllplatte (5) zu kommen,
    - einen sich entlang der Ebene der Bedachung erstreckenden und Befestigungsmittel des Sparrenprofils (3) am Fassadenprofil (2) tragenden Flansch (37).

32. Anhakprofil (6), das besonders zur Herstellung eines Schiebedachs nach Anspruch 11 ausgebildet und dadurch gekennzeichnet ist, daß es die Form eines U aufweist, das einen mit einer äußeren Nute (40) zur Aufnahme einer Dichtung versehenen Schenkel (39), und einen Steg (43) besitzt, der außenseitig mit einem hohlen Wulst (41) und einer an der Außenseite des Stegs angebrachten Nute (42) versehen ist.

Fig. 1

Fig. 2

Fig. 3

Fig. 6

Fig. 4

Fig. 5

Fig. 7

Fig. 8

EP 0 239 141 B1

Fig. 9

EP 0 239 141 B1

Fig. 10

Fig. 12

Fig. 11

Fig. 13

3

5

54

36

2

Fig. 14

9
62
12
8
65
10
64
13
19
11

EP 0 239 141 B1